# EUROPEAN PATENT SPECIFICATION

(11) **EP 2 263 294 B1**
(45) Date of publication and mention of the grant of the patent: **16.10.2013**
(21) Application number: 09717430.4
(22) Date of filing: 01.03.2009
(51) Int. Cl.: H02G 3/18

(54) **APPARATUS FOR INSTALLATION OF ELECTRICAL FLOOR BOXES**
VORRICHTUNG ZUR INSTALLATION VON ELEKTRISCHEN BODENKÄSTEN
APPAREIL DESTINÉ À L INSTALLATION DE BOÎTES ÉLECTRIQUES DE SOL

(30) Priority: 03.03.2008 US 33178 P
(43) Date of publication of application: 22.12.2010
(73) Proprietor: The Wiremold Company, West Hartford, CT 06110 (US)
(72) Inventor: BOWMAN, Timothy, S., Canton Connecticut 06019 (US); THIBAULT, Steven, C., Harwinton Connecticut 06791 (US)
(74) Representative: Arvela, Sakari Mikael
(86) International application number: PCT/US2009/035621
(87) International publication number: WO 2009/111358

(56) References cited:
- WO-A1-93/00732
- DE-U1- 20 205 354
- GB-A- 2 323 719
- GB-A- 2 378 587
- US-A- 3 928 716
- US-A- 5 408 045
- US-A- 5 571 993
- US-A- 5 777 263
- US-A1- 2006 237 211

## Description

### FIELD OF THE INVENTION

The present invention relates to electrical floor boxes and, more particularly, to apparatus for installation thereof.

### BACKGROUND OF THE INVENTION

Electrical floor boxes are typically installed in a floor and house electrical components. The floor boxes generally must be mounted substantially flush with the upper surface of the floor. Various building and construction sites have floors of different types and thickness. The floor boxes must be installed either in a concrete floor or a raised floor. Currently, when the floor boxes are installed, electricians must bring to the site the proper type of box to be prepared to install the floor boxes in either type of the floor. Traditionally, the box for the particular floor type has a unique mounting apparatus for that type of floor. Also, the current mounting devices are cumbersome and take additional time for installation and adjustment.

DE 20205354 U1 discloses an electrical floor box assembly for installation in a floor, wherein an electrical floor box having a plurality of sidewalls is employed with a clamp assembly which is attached to one of the sidewalls for allowing the box to be installed with a raised floor or a concrete floor.

US 3928716 A discloses an electrical outlet box with a mounting bracket, which can be mounted on the studding of a building, and a separate wiring box which has substantially conventional forward-facing outlet openings and terminals at the rear for power wires. The wiring box can be received in a sliding manner on a track-and-rail system into the mounting bracket so that the assembly can be mounted on a stud prior to the installation of a wallboard.

GB 2378587 A discloses a floor installation box which has a frame and a plurality of retractable blades which in use engage beneath a floor opening to clamp the frame in position. The blades are held in an extended position by an outwardly biased ratchet mechanism having a coil compression spring which acts against the frame, and a spring pawl which is integral with the blade and can be engaged with teeth which are formed on the frame.

GB 2323719 A discloses a floor installation box having a frame, a support projecting from the frame, a clamp which is rotatably mounted externally of the frame and means disposed within the frame for moving the clamp between a first position enabling insertion and removal of the frame through the aperture and a second position in which the floor is clamped between the support and the clamp. The box also has locking means for securing the clamp in its second position.

WO 93/00732 A1 discloses an electrical outlet box which is formed as a metal box in which electrical sockets or switches can be mounted in the bottom. The box has a lid assembly which is vertically adjustable relative to the box by means of a pawl and ratchet arrangement. This arrangement enables rapid adjustment of the vertical distance between the lid and box so that different thicknesses of floor covering can be allowed for.

Accordingly, there is a need for an effective and inexpensive device for installing an electrical floor box into multiple floor types.

### SUMMARY OF THE INVENTION

An electrical floor box assembly for installation in a floor includes an electrical floor box having a plurality of sidewalls and a clamp assembly attached to one of the sidewalls for allowing the box to be attached onto a raised floor or a concrete floor. The clamp assembly includes a bracket having a bracket body attached onto one of the sidewalls and at least one bracket ear protruding from the bracket body. The at least one bracket ear is movable between a disengaged position and an engaged position such that in the disengaged position the at least one bracket ear is substantially flush with the bracket body and in the engaged position the at least one bracket ear protrudes outwardly from the bracket body at an angle. In the engaged position, the at least one bracket ear engages an undersurface of the raised floor to accommodate floors of different thicknesses. In the disengaged position, the at least one bracket ear is moved to be substantially flush with the bracket body such that the floor box can be inserted through an opening within the floor. The clamp assembly may further include a leveling subassembly for installation of the electrical floor box onto a sub-floor. The leveling subassembly includes means for securing the leveling subassembly onto the electrical floor box and means for adjusting height of the box relative to the sub-floor, with the means for adjusting being movably attached to the means for attaching. The leveling subassembly provides a dual adjustment mechanism for leveling the floor box on the sub-floor.

### BRIEF DESCRIPTION OF DRAWINGS

FIG. 1 is a perspective view of an electrical floor box assembly including an electrical floor box supported with a sub-floor by a clamp assembly, according to an embodiment of the present invention;
FIG. 2 is an enlarged schematic top view of a bracket of the clamp assembly of FIG. 1;
FIG. 3 is a perspective view of the electrical floor box with a bracket of the clamp assembly of FIG. 1 in a disengaged position;
FIG. 4 is a partially broken away plan view of the electrical floor box of the bracket of

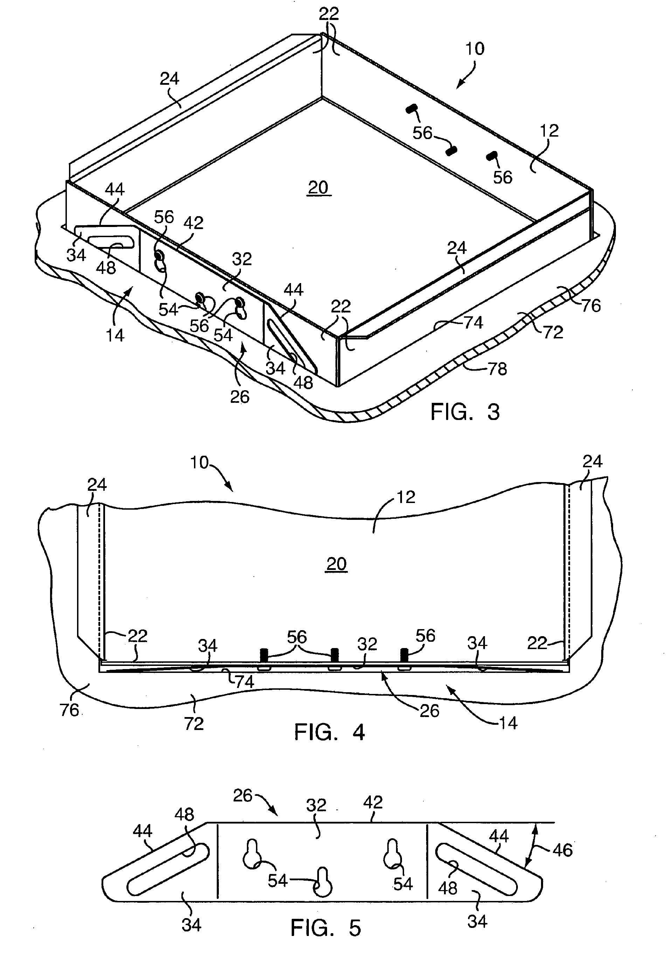

FIG.3 in the disengaged position;

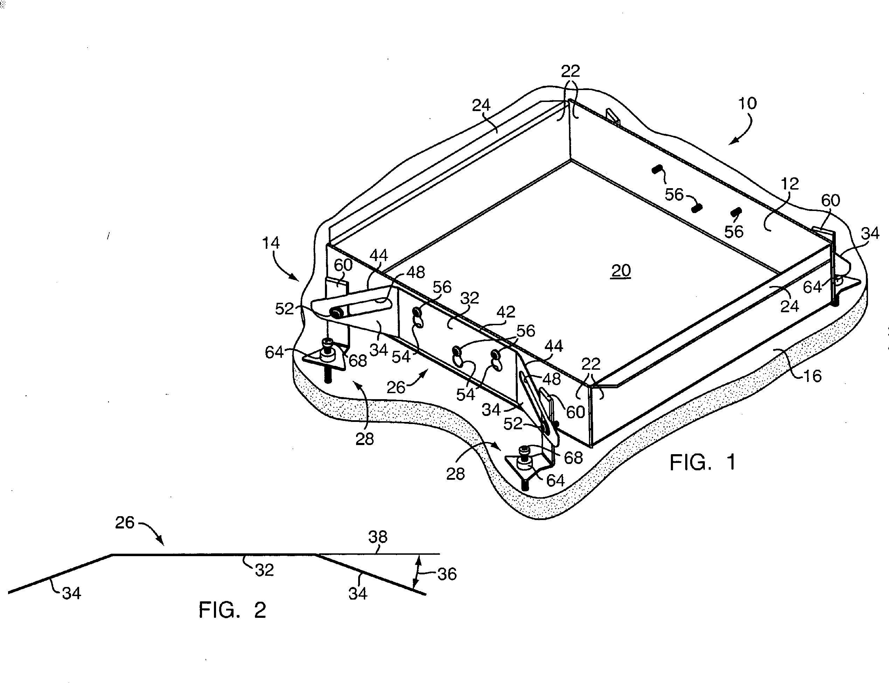

FIG. 5 is a front view of the bracket of FIG. 2;

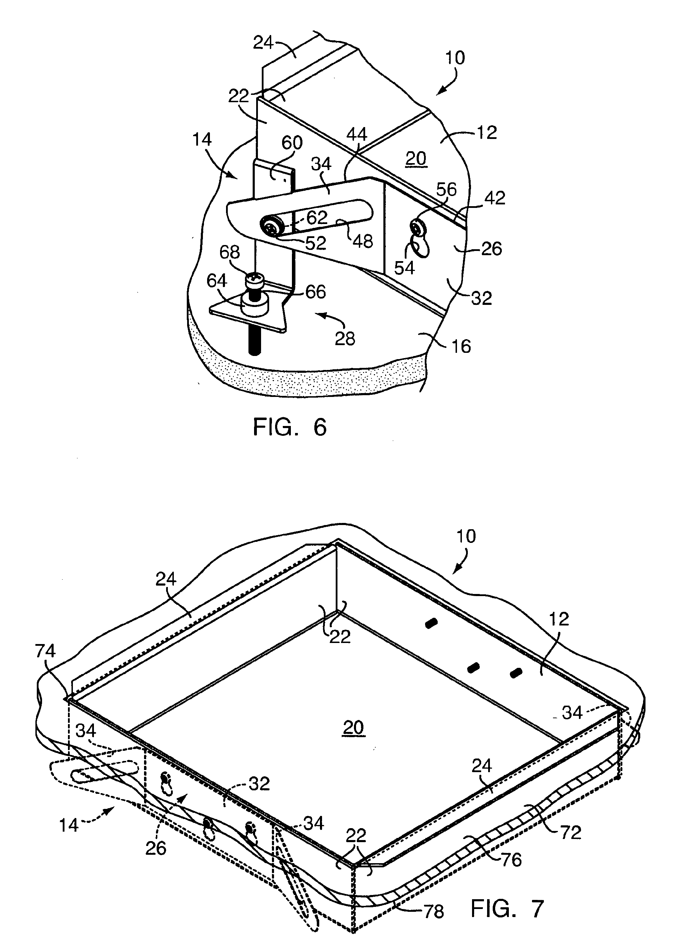

FIG. 6 is an enlarged, partially broken away, perspective view of a leveling subassembly attached to a bracket and the electrical floor box of FIG. 1;
FIG. 7 is a perspective view of the electrical floor box of FIG. 1 installed in a raised floor with a bracket shown in an engaged position, according to an embodiment of the present invention;

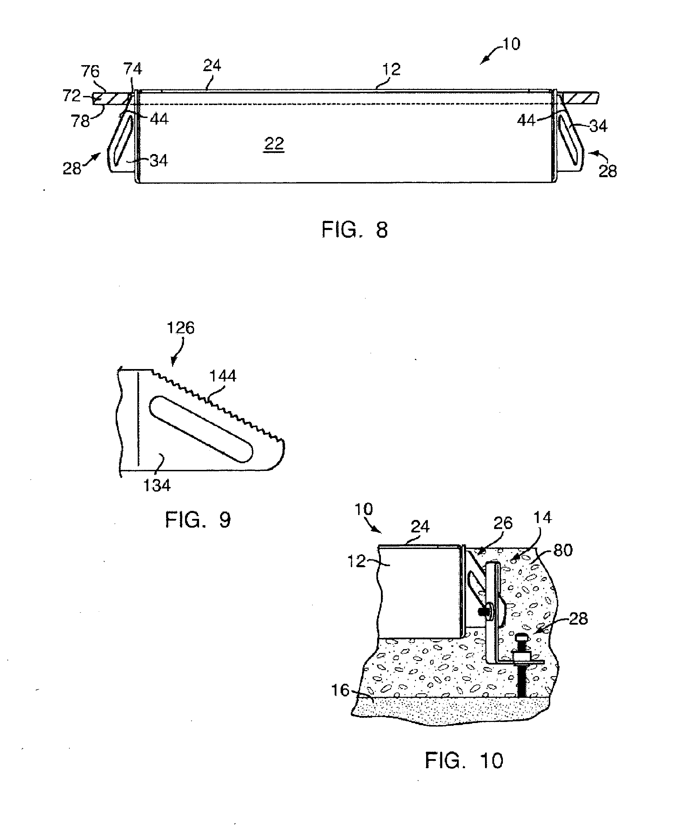

FIG. 8 is a partial, side view of the electrical floor box with the bracket of FIG.7 shown in the engaged position;
FIG. 9 is an enlarged, partially broken away view of an ear of the bracket of FIG. 4, in accordance with another embodiment of the present invention; and
FIG. 10 is a partial side view of the electrical floor box with the clamp assembly of FIG. 1 with concrete floor poured around the box.

### DETAILED DESCRIPTION OF PREFERRED EMBODIMENTS

Referring to FIG. 1, an electrical floor box assembly 10 includes a floor box 12 and a clamp assembly 14 attached to the box 12 and supporting the box 12 on a sub-floor 16. The floor box 12 has a bottom portion 20 and sidewalls 22 with outward portions 24 extending outwardly from sidewalls 22. In a preferred embodiment, the outward portions are flanges extending from the sidewalls 22.

The clamp assembly 14 includes a bracket 26 attached to one of the sidewalls 22 of the box 12 and a leveling subassembly 28 mounted to the bracket 26. The bracket 26 includes a bracket body 32 with ears 34 extending outwardly therefrom. Each of the ears 34 extends at an angle 36 from a plane 38 defined by the bracket body 32, as shown in FIG. 2. The ears are movable between an engaged position, shown in FIGS. 1 and 2, wherein the ears 34 extend outwardly from the bracket body 32 and the sidewall 22 at the predetermine angle 36 and a disengaged position, shown in FIGS. 3 and 4, wherein the ears 34 are compressed to be substantially flush with the bracket body 32 and the sidewalls 22. The bracket body 32 includes an upper edge 42 and each ear 34 includes a sloped edge 44 to define a slope 46 relative to the upper edge 42 of the bracket body 32, as shown in FIG. 5. Each ear 34 further includes a slot 48 for attaching the leveling subassembly 28 thereto using a fastener 52, such as a screw or any other type of fastener, as best seen in FIGS. 1 and 6. The slot 48 provides for adjustment of the leveling subassembly 28 relative to the box 12 to accommodate for varying depth of the concrete floor. A plurality of holes 54 is provided in the bracket body 32 and the floor box 12 for assembling the clamp assembly 14 to the floor box 12 using fasteners 56, which can be screws or any other type of fastener.

Referring to FIG. 6, the leveling subassembly 28 includes a support 60 with at least one hole 62 for receiving the fastener 52, and may include a plurality of holes 62 arranged for further adjustment of the leveling subassembly 28 relative to the floor box 12. The support 60 includes a foot 64 having an inner threaded portion 66 for movably accepting an adjusting screw 68. The adjusting screw 68 is arranged substantially perpendicular to the floor 16. The adjusting screw 68 is operable to adjust the distance from the sub-floor 16 to the electrical floor box 12.

Referring to FIGS. 3, 4, 7, and 8, the bracket 26 can be used with or without the leveling subassembly 28. The bracket 26 is used without the leveling subassembly 28 for hanging the electrical box 12 in a raised floor 72. The bracket 26 is first installed to the sidewall 22 of the floor box 12. As best seen in FIGS. 3 and 4, the ears 34 are deflected into disengaged position towards the sidewall 22 of the floor box 12 to allow lowering of the floor box 12 into an opening 74 of the raised floor 72 until the flanges 24 support the weight of the floor box 12 against an upper surface 76 of the raised floor. As best seen in FIGS. 7 and 8, the ears 34 then spring outwardly from the sidewall 22 of the electrical box 12 into the engaged position until the sloped edges 44 contact an undersurface 78 of the raised floor 72, thereby securing and clamping the electrical box 12 to the floor 72. The sloped edges 44 allow for various thicknesses of the floor 72 as the sloped edge 44 engages the underside 78 of the floor 72 regardless of the floor's thickness. The bracket 26 is fabricated from a durable and flexible material such as a metal or another material such that the ears 34 are bendable relative to the bracket body 32 and can spring back under the floor 72 once the floor box is secured in place.

In accordance with another embodiment of the invention, as shown in FIG. 9, a bracket 126 includes an ear 134 with a sloped edge 144 having a toothed or stepped profile, wherein the like numerals represent the like elements. The toothed profile can enhance engagement of the sloped edge 144 against the undersurface 78 of the floor 72.

The bracket 26 is used with the leveling subassembly 28 for leveling the electrical box 12 on the sub-floor 16, as shown in FIG. 1. The leveling subassembly 28 is attached to the slot 48 of the bracket 26 via fasteners 52. Depending on the depth of the floor 16, the leveling subassembly 28 can be mounted at different points within the slot 48 allowing for accommodation of varying depth of the floor. The adjusting screw 68 is further adjusted on each of the leveling subassemblies 28 to further accommodate for varying depth of the floor and also to properly level the box to compensate for minor, local variations in depth of the sub-floor 16. Once the leveling subassembly 28 is adjusted, concrete floor 80 is poured around the floor box 12 to achieve final installed configuration for concrete floors, as shown in FIG. 10.

One advantage of the present invention is that the clamp assembly 14 can be used for installing a floor box 12 either on a sub-floor 16 or in a raised floor 72, thereby enabling an electrician to keep at hand only one component for accomplishing various installations. This advantage reduces installation time and inventory.

Another advantage is that the bracket 26, 126 is a cost and time effective mechanism for attachment of the floor box 12 to the raised floor 72. The bracket 26, 126 does not require any adjustment once the floor box 12 is placed within the floor opening 74 as the ears 34 automatically spring into the engaged position to protrude outwardly from the bracket body 32 to secure the floor box 12 to the raised floor 72.

A further advantage is that the bracket 26, 126 is self-adjusting and does not require any adjustments when the floor box is installed on the raised floor and can accommodate raised floors of varying thicknesses.

## Claims

1. An electrical floor box assembly (10) for installation in a floor, the assembly (10) comprising:
- an electrical floor box (12) having a plurality of sidewalls (22),
- a clamp assembly (14) attached to one of the sidewalls (22) for allowing the box (12) to be installed with a raised floor or a concrete floor, the clamp assembly (14) comprising a bracket (26) having a bracket body (32) attached onto one of the sidewalls (22) and at least one bracket ear (34) protruding from the bracket body (32),
**characterized in that** the at least one bracket ear (34) is movable between a disengaged position and an engaged position such that in the disengaged position the at least one bracket ear (34) is substantially flush with the bracket body (32) and in the engaged position the at least one bracket ear (34) protrudes outwardly from the bracket body (32) at an angle (36).

2. The electrical floor box assembly (10) according to claim 1, wherein in the engaged position, the at least one bracket ear (34) engages an undersurface (78) of the raised floor (72).

3. The electrical floor box assembly (10) according to claim 1, wherein in the disengaged position, the at least one bracket ear (34) is moved to be substantially flush with the bracket body (32) such that the floor box (12) can be inserted through an opening (74) within the floor.

4. The electrical floor box assembly (10) according to claim 1, wherein the at least one bracket ear (34) has an upper edge for engaging the undersurface of the floor.

5. The electrical floor box assembly (10) according to claim 4, wherein the upper edge is sloped to accommodate various thicknesses of the floor.

6. The electrical floor box assembly (10) according to claim 5, wherein the upper edge is profiled to enhance engagement of the bracket with the floor.

7. The electrical floor box assembly (10) according to claim I wherein at least one of the sidewalls (22) of the electrical floor box (12) has an outward edge.

8. The electrical floor box assembly (10) according to claim 9, wherein the outward edge is a flange (24) to support the electrical floor box assembly (10) on the raised floor.

9. The electrical floor box assembly (10) according to claim 1, wherein there are two bracket ears (34) and each ear (34) includes a slot (48).

10. The electrical floor box assembly (10) according to claim 9, wherein the slot is sloped.

11. The electrical floor box assembly (10) according to claim 10, wherein the clamp assembly (14) further comprises a leveling subassembly (28) for installation of the electrical floor box (12) onto a sub-floor (16).

12. The electrical floor box assembly (10) according to claim 11, wherein the leveling subassembly (28) comprises:
- means for securing the leveling subassembly (28) onto the electrical floor box (12);
and
- means for adjusting height of the box (12) relative to the sub-floor (16), with the means for adjusting being movably attached to the means for attaching.

13. The electrical floor box assembly (10) according to claim 12, wherein the means for attaching is a support attached onto the bracket.

14. The electrical floor box assembly (10) according to claim 13, wherein the support is adjustably attached to the bracket via the sloped slot (48) formed within the bracket (26) so that the height of the floor box (12) with respect to the concrete floor can be adjusted.

15. The electrical floor box assembly (10) according to claim 12, wherein the means for adjusting is a screw movably engaged by the means for attaching such that the height of the leveling subassembly (28) with respect to the concrete floor can be adjusted.

## Patentansprüche

1. Elektrische Bodendosengruppe (10) zur Installation in einem Boden, wobei die Gruppe (10) aufweist:
- eine elektrische Bodendose (12) mit einer Vielzahl an Seitenwänden (22),
- eine Halterungsbaugruppe (14), die an einer der Seitenwände (22) befestigt ist, damit die Dose (12) mit einem Montageboden oder einem Betonboden installiert werden kann, wobei die Halterungsbaugruppe (14) einen Bügel (26) mit einem Bügelkörper (32), der an einer der Seitenwände (22) befestigt ist, und zumindest eine Bügelöse (34), die aus dem Bügelkörper (32) hervorsteht, aufweist.
**dadurch gekennzeichnet, dass** die zumindest eine Bügelöse (34) zwischen einer gelösten Position und einer Eingriffsposition beweglich ist, so dass die zumindest eine Bügelöse (34) in der gelösten Position im Wesentlichen mit dem Bügelkörper (32) bündig ist und die zumindest eine Bügelöse (34) in der Eingriffsposition aus dem Bügelkörper (32) in einem Winkel (36) nach außen hervorsteht.

2. Elektrische Bodendosengruppe (10) nach Anspruch 1, wobei in der Eingriffsposition die zumindest eine Bügelöse (34) mit einer Unterfläche (78) des Montagebodens (72) in Eingriff steht.

3. Elektrische Bodendosengruppe (10) nach Anspruch 1, wobei in der gelösten Position die zumindest eine Bügelöse (34) so bewegt wird, dass sie im Wesentlichen mit dem Bügelkörper (32) bündig ist, so dass die Bodendose (12) durch eine Öffnung (74) in dem Boden eingeführt werden kann.

4. Elektrische Bodendosengruppe (10) nach Anspruch 1, wobei die zumindest eine Bügelöse (34) eine obere Kante zum Eingriff mit der Unterfläche des Bodens aufweist.

5. Elektrische Bodendosengruppe (10) nach Anspruch 4, wobei die obere Kante abgeschrägt ist, um verschiedene Dicken des Bodens aufzunehmen.

6. Elektrische Bodendosengruppe (10) nach Anspruch 5, wobei die obere Kante profiliert ist, um den Eingriff des Bügels mit dem Boden zu verbessern.

7. Elektrische Bodendosengruppe (10) nach Anspruch 1, wobei zumindest eine der Seitenwände (22) der elektrischen Bodendose (12) eine äußere Kante aufweist.

8. Elektrische Bodendosengruppe (10) nach Anspruch 9, wobei die äußere Kante ein Flansch (24) ist, um die elektrische Bodendosengruppe (10) auf dem Montageboden abzustützen.

9. Elektrische Bodendosengruppe (10) nach Anspruch 1, wobei es zwei Bügelösen (34) gibt und jede Öse (34) einen Spalt (48) aufweist.

10. Elektrische Bodendosengruppe (10) nach Anspruch 9, wobei der Spalt abgeschrägt ist.

11. Elektrische Bodendosengruppe (10) nach Anspruch 10, wobei die Halterungsbaugruppe (14) ferner eine Nivellierungsuntergruppe (28) zur Installation der elektrischen Bodendose (12) auf einem Unterboden (16) aufweist.

12. Elektrische Bodendosengruppe (10) nach Anspruch 11, wobei die Nivellierungsuntergruppe (28) aufweist:
- Mittel zum Befestigen der Nivellierungsuntergruppe (28) auf der elektrischen Bodendose (12); und
- Mittel zum Einstellen der Höhe der Dose (12) im Verhältnis zu dem Unterboden (16), wobei das Mittel zum Einstellen beweglich an dem Mittel zum Befestigen befestigt ist.

13. Elektrische Bodendosengruppe (10) nach Anspruch 12, wobei das Mittel zum Befestigen eine an dem Bügel befestigte Stütze ist.

14. Elektrische Bodendosengruppe (10) nach Anspruch 13, wobei die Stütze an dem Bügel mittels des abgeschrägten Spalts (48), der in dem Bügel (26) ausgebildet ist, einstellbar befestigt ist, so dass die Höhe der Bodendose (12) im Verhältnis zu dem Betonboden einstellbar ist.

15. Elektrische Bodendosengruppe (10) nach Anspruch 12, wobei das Mittel zum Einstellen eine Schraube ist, in die das Mittel zum Befestigen beweglich eingreift, so dass die Höhe der Nivellierungsuntergruppe (28) im Verhältnis zu dem Betonboden einstellbar ist.

## Revendications

1. Ensemble de coffret électrique de sol (10) pour l'installation dans un sol, l'ensemble (10) comprenant :
- un coffret électrique de sol (12) comportant une pluralité de parois latérales (22),
- un ensemble de serrage (14) fixé à l'une des parois latérales (22) pour permettre l'installation du boîtier (12) avec un sol surélevé ou un sol en béton, l'ensemble de serrage (14) comprenant une console (26) comportant un corps de console (32) fixé sur l'une des parois latérales (22) et au moins une patte de console (34) dépassant du corps de console (32), **caractérisé en ce que** la au moins une patte de console (34) est mobile entre une position désenclenchée et une position enclenchée de sorte que dans la position désenclenchée, la au moins une patte de console (34) est sensiblement au droit du corps de console (32) et dans la position enclenchée, la au moins une patte de console (34) dépasse vers l'extérieur depuis le corps de console (32) en formant un angle (36).

2. Ensemble de coffret électrique de sol (10) selon la revendication 1, dans lequel dans la position enclenchée, la au moins une patte de console (34) enclenche une sous-face (78) du sol surélevé (72).

3. Ensemble de coffret électrique de sol (10) selon la revendication 1, dans lequel dans la position désenclenchée, la au moins une patte de console (34) est déplacée pour être sensiblement au droit du corps de console (32) de sorte que le coffret de sol (12) peut être inséré à travers une ouverture (74) dans le sol.

4. Ensemble de coffret électrique de sol (10) selon la revendication 1, dans lequel la au moins une patte de console (34) comporte un bord supérieur pour enclencher la sous-face du sol.

5. Ensemble de coffret électrique de sol (10) selon la revendication 4, dans lequel le bord supérieur est incliné pour se conformer à diverses épaisseurs du sol.

6. Ensemble de coffret électrique de sol (10) selon la revendication 5, dans lequel le bord supérieur est profilé pour améliorer l'enclenchement de la console avec le sol.

7. Ensemble de coffret électrique de sol (10) selon la revendication 1, dans lequel au moins l'une des parois latérales (22) du coffret électrique de sol (12) comporte un bord vers l'extérieur.

8. Ensemble de coffret électrique de sol (10) selon la revendication 9, dans lequel le bord vers l'extérieur est une bride (24) pour supporter l'ensemble de coffret de sol (10) sur le sol surélevé.

9. Ensemble de coffret électrique de sol (10) selon la revendication 1, dans lequel se trouvent deux pattes de console (34) et chaque patte (34) comprend une fente (48).

10. Ensemble de coffret électrique de sol (10) selon la revendication 9, dans lequel la fente est inclinée.

11. Ensemble de coffret électrique de sol (10) selon la revendication 10, dans lequel l'ensemble de serrage (14) comprend en outre un sous-ensemble d'arasement (28) pour l'installation du coffret électrique de sol (12) sur un sous-plancher (16).

12. Ensemble de coffret électrique de sol (10) selon la revendication 11, dans lequel le sous-ensemble d'arasement (28) comprend :
- un moyen d'arrimage du sous-ensemble d'arasement (28) sur le coffret électrique de sol (12) ; et
- un moyen de réglage de la hauteur du coffret (12) par rapport au sous-plancher (16), le moyen de réglage étant fixé de façon amovible au moyen de fixation.

13. Ensemble de coffret électrique de sol (10) selon la revendication 12, dans lequel le moyen de fixation est un support fixé sur la console.

14. Ensemble de coffret électrique de sol (10) selon la revendication 13, dans lequel le support est fixé de façon réglable à la console via la fente inclinée (48) formée dans la console (26) de sorte que la hauteur du coffret de sol (12) par rapport au sol en béton peut être réglée.

15. Ensemble de coffret électrique de sol (10) selon la revendication 12, dans lequel le moyen de réglage est une vis enclenchée de façon amovible par le moyen de fixation de sorte que la hauteur du sous-ensemble d'arasement (28) par rapport au sol en béton peut être réglée.
